# DEMANDE DE BREVET EUROPEEN

(11) **EP 1 348 650 A1**
(43) Date de publication de la demande: **01.10.2003**
(21) Numéro de dépôt: 03290622.4
(22) Date de dépôt: 13.03.2003
(51) Int. Cl.: B65G 47/14

(54) **Dispositif mécanique et à flux d'air combiné pour le démêlage de ressorts**

(30) Priorité: 18.03.2002 FR 0203327
(71) Demandeur: Société Technique d'Automatisme et d'Ensembles à Ressorts, dite STAER, 87000 Limoges (FR)
(72) Inventeur: Meynieux, Jean, 87000 Limoges (FR)
(74) Mandataire: Fantin, Laurent

(57) **Abrégé**

L'objet de l'invention est un dispositif de démêlage de ressorts (60) contenu dans un bac (12) d'alimentation, caractérisé en ce qu'il comprend des moyens (14) de démêlage avec un rail (30) de réception des ressorts, muni d'une rainure (36) ouverte, des moyens (32) de calibrage dynamique des ressorts, des moyens d'approvisionnement en ressorts dudit rail et des moyens (18) d'évacuation.

## Description

La présente invention concerne un dispositif de démêlage de ressorts qui comporte des moyens mécaniques de démêlage, combinés à un flux d'air.

Les ressorts ayant des dimensions de 5 à 40 mm de longueur et 2 à 15 mm par exemple peuvent être saisis aisément à la main ou avec des outils mais il se produit toujours des emmêlements de ces ressorts dès qu'ils sont placés en vrac. Des systèmes mécaniques comprenant par exemple des bols vibrants ne donnent pas nécessairement satisfaction pour assurer le démêlage et la distribution.

Or il existe un besoin de tri des ressorts un à un pour permettre la distribution soit directement à des postes de travail pour une mise en place sur les produits auxquels ils sont destinés, soit pour des livraisons à des postes de conditionnement en vue d'une utilisation ultérieure.

De façon générale, il convient dans un premier temps, quelle que soit la destination, de trier et de séparer les ressorts pour les faire circuler dans un tube d'évacuation.

C'est là l'objectif du dispositif selon la présente invention.

De plus, compte tenu du faible coût des produits et de la faible valeur ajoutée, il convient que le dispositif reste simple et présente une grande fiabilité.

Par contre, il faut nécessairement un dispositif qui assure une discrimination totale, qui supprime tout risque de distribuer deux ressorts intimement liés, qui ait une cadence importante de séparation et de tri.

On sait également que dans certains lots de ressorts, il existe en fin de tri des pelotes de ressorts, inextricables, engendrées par les moyens de tri eux-mêmes, notamment ceux qui utilisent les vibrations. Ces pelotes sont alors inutilisables et constituent des pertes. Il conviendrait de les éviter.

Dans le dispositif de la présente invention, il est possible à tout moment de constater le bon fonctionnement et en cas de panne, la remise en service est extrêmement simple et rapide. De même, le chargement s'effectue sans précaution particulière, par remplissage en vrac d'un bac d'alimentation, par une trémie éventuellement, pour permettre un travail en continu.

En effet, le travail en continu est souvent une contrainte dans les milieux nécessitant la mise en place de ressorts comme l'automobile, l'électroménager ou l'électronique pour ne citer qu'eux.

Le dispositif selon la présente invention est maintenant décrit à partir d'un mode de réalisation optimisé dont les caractéristiques indiquées ne sont aucunement limitatives.

Cette description est faite en regard des dessins annexés qui représentent :
- figure 1, une vue en perspective extérieure du dispositif complet,
- figure 2, une vue en perspective des moyens de démêlage, et
- figures 3A et 3B, des vues du fonctionnement des moyens d'alimentation.

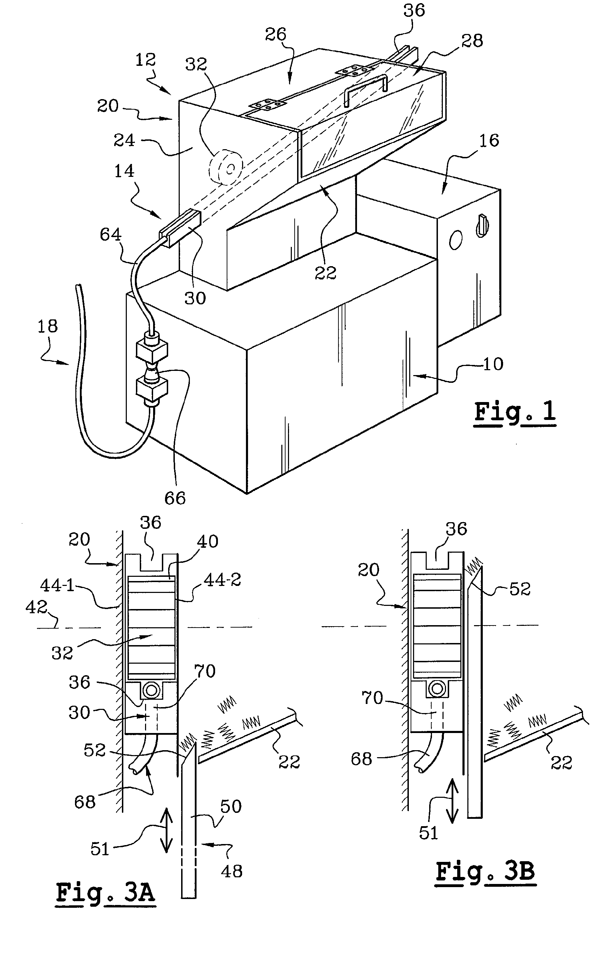

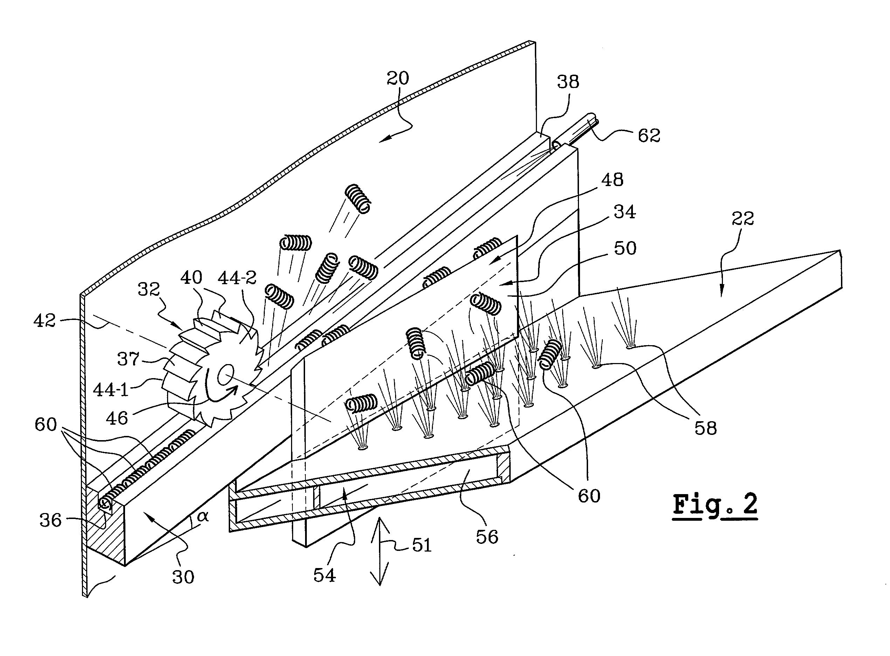

Sur la figure 1, on a représenté un bâti 10 supportant un bac 12 d'alimentation équipé de moyens 14 de démêlage, un poste 16 de commande et des moyens 18 d'évacuation.

Le bâti comprend les moyens moteurs et l'alimentation ou la production d'air comprimé si l'ensemble est autonome. Ces éléments sont bien connus et ne sont pas représentés pour focaliser les dessins sur l'objet de l'invention.

Le bac d'alimentation comprend une paroi arrière 20 verticale, un fond 22 incliné vers la paroi arrière et trois faces 24 latérales complémentaires ainsi qu'un couvercle 26, obturant le bac et permettant le remplissage. Le couvercle 26 est muni d'un abattant 28 qui permet un accès à l'intérieur du bac. Il est aussi possible d'installer une trémie ou une goulotte sur ce couvercle pour faciliter le rechargement en ressorts, sans avoir à ouvrir l'abattant.

Les moyens 14 de démêlage comprennent un rail 30, des moyens 32 de calibrage dynamique et des moyens 34 d'approvisionnement en ressorts dudit rail.

Le rail est rapporté sur la paroi arrière 20, avec une inclinaison d'un angle α par rapport à l'horizontale.

Ce rail comprend une rainure 36 longitudinale, ouverte, centrée et ménagée sur la face supérieure 38 du rail 30.

Cette rainure 36 est à section carrée, la dimension du côté étant égale au diamètre du ressort, aux tolérances précises près.

Les moyens 32 de calibrage dynamique comprennent une roue 37, sensiblement de la largeur de la face 38 supérieure du rail. Cette roue est munie de crans 40 et son axe 42 est de rotation est perpendiculaire à la face arrière 20.

Ainsi l'une des joues 44-1 de la roue se trouve parallèle et à proximité immédiate de la face arrière 20.

Le sens de rotation est indiqué par la flèche 46. Il est orienté pour faire tourner les crans de l'aval vers l'amont du rail.

La roue est positionnée pour que les crans passent au-dessus du rail, en ne laissant qu'un jeu inférieur au diamètre du fil dans lequel sont fabriqués les ressorts.

Les moyens 34 d'approvisionnement en ressorts des moyens de démêlage comprennent un élévateur 48. Cet élévateur est constitué d'une plaque 50, verticale et parallèle à la face arrière 20. Cette plaque est également parallèle à la face verticale libre du rail et de l'autre joue 44-2 de la roue 32.

Cette plaque est dynamique et subit un mouvement alternatif vertical suivant la double flèche 51, engendré par exemple au moyen d'une bielle articulée.

La plaque passe à travers une ouverture ménagée dans le fond 22 du bac d'alimentation pendant ses déplacements.

Sur les figures 3A et 3B, on appréhende encore mieux ces mouvements de la plaque.

Ainsi le bord 52 supérieur de la plaque vient affleurer la face intérieure du fond 22 en position basse et remonte au-dessus du rail en position haute, sur toute sa longueur.

On note que la tranche du bord 52 de cette plaque est un biseau, incliné vers le rail.

Les moyens 34 d'approvisionnement en ressorts sont complétés avantageusement par des moyens 54 d'agitation des ressorts sous air au sein même du bac d'alimentation 12.

Ces moyens d'agitation comprennent une chambre 56 de répartition de l'air sous pression et des ajutages 58, débouchant sur la face intérieure du fond 22.

La chambre pourrait être remplacée par des conduits flexibles individuels d'alimentation de chaque ajutage, sans modifier aucunement l'invention.

Les jets d'air sous pression émis par les ajutages se trouvent sous les ressorts 60, disposés en vrac dans ledit bac.

Les moyens 18 d'évacuation comprennent une buse 62 d'émission d'air sous pression, positionnée à l'amont de la rainure 36 du rail 30 et dirigée dans la rainure de l'amont vers l'aval.

Ces moyens d'évacuation sont complétés par un tube 64 avec un relais 66 de propulsion par air comprimé des ressorts 60 introduits dans le tube 64.

Le fonctionnement d'un tel dispositif est maintenant indiqué en regard des différentes figures, considérées indifféremment.

Des ressorts 60 sont disposés en vrac dans le bac 12 d'alimentation.

De l'air sous pression est distribué à travers les ajutages 58, provoquant l'agitation des ressorts avec formation d'un lit fluidisé de ressorts.

La plaque 50 est mise en mouvement alternatif dans la direction verticale.

Les ressorts sont donc mis en mouvement et certains sont conduits par l'action combinée des flux d'air des ajutages et par la pente du fond 22 vers la tranche du bord 52 de la plaque. Ces ressorts sont alors soulevés par la plaque avec son effet ascenseur. Comme le bord est incliné, les ressorts 60 entraînés sont déversés le long du rail 30, sur la face supérieure 38.

Comme ce rail est incliné, les ressorts glissent, roulent sur cette face 38.

Lorsqu'un ressort isolé se trouve parfaitement aligné avec la rainure 36, il se place à l'intérieur.

Dès lors, il subit l'action du flux d'air émis par la buse 62 des moyens 18 d'évacuation.

Le ressort est poussé dans la rainure.

Parallèlement les moyens 32 de calibrage dynamique sont mis en service. La roue 37 est mise en rotation.

De ce fait, les ressorts 60 qui se trouvent correctement positionnés dans la rainure 36 du rail 30 passent sous les crans de la roue 37 et sont propulsés dans le tube 64 par l'effet combiné du flux d'air de la buse 62 et de la pente α du rail.

Les autres ressorts déversés par la plaque 50 lors de son ascension et qui se trouvent sur la face 38 du rail roulent et glissent jusqu'à la roue. Celle-ci par sa vitesse de rotation et ses crans, heurte et projette les ressorts dans différentes directions, au sein du bac d'alimentation. Ces ressorts se trouvent ramenés dans le lit fluidisé et démêlés s'ils étaient encore emmêlés, uniquement par les effets de choc et par la vitesse de propulsion.

La plaque pendant ce temps poursuit son cycle et dégage l'espace pour venir recharger de nouveaux ressorts.

Ainsi, les ressorts sont en perpétuel mouvement et statistiquement, à chaque cycle, il s'en trouve certains correctement positionnés dans la rainure du rail.

Si deux ressorts se trouvent néanmoins entrelacés par leurs spires, que ce double ressort tombe dans la rainure et se trouve poussé vers la roue, la surépaisseur est telle que le double ressort est évacué de la rainure par les crans et propulsé dans l'espace libre, contre les parois, provoquant le démêlage de ce double ressort en deux ressorts pour un futur retour sur le rail.

On constate qu'en fin de chargement ou de travail, le dernier ressort sera toujours conduit vers la plaque et distribué sur le rail par la plaque, grâce au fond 22 incliné et au mouvement des flux d'air. On utilise donc la totalité des ressorts placés dans le bac 12 d'alimentation.

Toute formation d'une pelote est évitée par une mise en mouvement perpétuelle des ressorts.

Un tel dispositif est d'une grande fiabilité car les pièces qui le constituent sont peu nombreuses, simples et la cinématique ne requiert aucun mouvement complexe source de problèmes.

Les cycles d'émission, le réglage de la puissance de ces flux, les vitesses de rotation de la roue ou tout autre paramètre est réglable à partir du poste 16 de commande, ceci à l'aide de vannes et de tout autre moyen connu ne nécessitant aucune description particulière.

Afin de perfectionner le dispositif et éviter tout blocage, il peut être disposé des moyens 68 d'éjection. De tels moyens comprennent une buse 70, débouchant sous les moyens 32 de calibrage dynamique, plus exactement sous la roue, immédiatement en amont. Un flux d'air de forte puissance peut être envoyé périodiquement, pendant une durée très courte, afin de chasser automatiquement tout ressort qui viendrait éventuellement à s'immobiliser sous la roue sans pour autant être renvoyé par les crans.

Ces moyens automatiques renforcent la fiabilité et diminuent le nombre d'interventions à leur minimum sur ce dispositif.

## Revendications

1. Dispositif de démêlage de ressorts (60) contenu dans un bac (12) d'alimentation, **caractérisé en ce qu'**il comprend des moyens (14) de démêlage avec un rail (30) de réception des ressorts, muni d'une rainure (36) ouverte, des moyens (32) de calibrage dynamique des ressorts, des moyens (34) d'approvisionnement en ressorts dudit rail et des moyens (18) d'évacuation des ressorts en sortie de rainure.

2. Dispositif de démêlage selon la revendication 1, **caractérisé en ce que** la rainure (36) est de section carrée avec un côté de dimension égale au diamètre de chaque ressort (60).

3. Dispositif de démêlage de ressorts selon l'une des revendications 1 ou 2, **caractérisé en ce que** les moyens (32) de calibrage dynamique sont disposés immédiatement au-dessus de la rainure (36) ouverte.

4. Dispositif de démêlage selon l'une quelconque des revendications précédentes, **caractérisé en ce que** les moyens (32) de calibrage dynamique comprennent une roue (37) munie de crans (40) et tournant de l'aval vers l'amont.

5. Dispositif de démêlage selon l'une quelconque des revendications précédentes, **caractérisé en ce que** les moyens (34) d'approvisionnement en ressorts du rail (30) comprennent une plaque (50) mobile verticalement avec un mouvement alternatif, parallèlement au rail, formant ascenseur, le bord (52) étant incliné vers ledit rail.

6. Dispositif de démêlage selon la revendication 5, **caractérisé en ce que** les moyens (34) d'approvisionnement en ressorts du rail (30) comprennent un fond (22) incliné du bac d'alimentation.

7. Dispositif de démêlage selon la revendication 5 ou 6, **caractérisé en ce que** les moyens (34) d'approvisionnement en ressorts du rail (30) comprennent des moyens (54) d'agitation sous air des ressorts (60) disposés au sein même du bac d'alimentation (12).

8. Dispositif de démêlage selon la revendication 7, **caractérisé en ce que** les moyens (54) d'agitation sous air des ressorts (60) sont composés d'une chambre (56) de répartition de l'air sous pression et des ajutages (58), débouchant sur la face intérieure du fond (22) du bac d'alimentation.

9. Dispositif de démêlage selon les revendications 1, 4 et 5, **caractérisé en ce que** le bac (12) d'alimentation comprend une face arrière (20) verticale, un fond (22) incliné vers cette face arrière, le rail (30) étant fixé sur cette face avec une inclinaison α par rapport à l'horizontale, la roue (37) étant de la largeur de la face (38) supérieure dudit rail, disposée immédiatement au-dessus de cette face, son axe de rotation (42) perpendiculaire à la face arrière (20), la plaque (50) étant parallèle au rail, avec des déplacements en translation parallèles à une joue (44-2) de la roue et à une face libre du rail (30).

10. Dispositif de démêlage selon l'une quelconque des revendications précédentes, **caractérisé en ce que** les moyens (18) d'évacuation comprennent une buse (62) d'émission d'air sous pression, positionnée à l'amont de la rainure (36) du rail (30) et dirigée dans la rainure de l'amont vers l'aval et des moyens (68) d'éjection, comprenant une buse (70), débouchant sous les moyens (32) de calibrage dynamique.
